# EUROPÄISCHE PATENTSCHRIFT

(11) **EP 3 355 139 B1**
(45) Veröffentlichungstag und Bekanntmachung des Hinweises auf die Patenterteilung: **04.11.2020**
(21) Anmeldenummer: 17153348.2
(22) Anmeldetag: 26.01.2017
(51) Int. Cl.: G05B 19/042, H04L 29/08

(54) **VERFAHREN ZUM BETREIBEN EINES AUTOMATISIERUNGSSYSTEMS SOWIE AUTOMATISIERUNGSSYSTEM, FELDGERÄT UND STEUERUNG ZUR DURCHFÜHRUNG DES VERFAHRENS**
METHOD FOR OPERATING AN AUTOMATION SYSTEM, AUTOMATION SYSTEM, FIELD DEVICE AND CONTROLLER FOR EXECUTION OF THE METHOD
PROCÉDÉ DE FONCTIONNEMENT D'UN SYSTÈME D'AUTOMATISATION, SYSTÈME D'AUTOMATISATION, APPAREIL DE TERRAIN ET CONTRÔLEUR DESTINÉS À EXÉCUTER LEDIT PROCÉDÉ

(43) Veröffentlichungstag der Anmeldung: 01.08.2018
(73) Patentinhaber: Siemens Aktiengesellschaft, 80333 München (DE)
(72) Erfinder: Balduf, Jochen, 76707 Hambrücken (DE); Gottron, Jens, 76137 Karlsruhe (DE); Lüder, Stefan, 76149 Karlsruhe (DE); Weiler, Christoph, 75015 Bretten (DE)

(56) Entgegenhaltungen:
- EP-A1- 2 711 795
- DE-A1-102009 045 386
- DE-A1-102009 046 041
- DE-T2- 69 933 895

## Beschreibung

Die Erfindung betrifft ein Verfahren zum Betreiben eines Automatisierungssystems mit zumindest einer Steuerung und mit mehreren Feldgeräten, die durch ein Netzwerk zur Datenkommunikation miteinander verbunden sind. Weiterhin betrifft die Erfindung ein Automatisierungssystem, ein Feldgerät und eine Steuerung, die zur Durchführung des Betriebsverfahrens ausgebildet sind.

In prozesstechnischen Anlagen werden zur Steuerung von Prozessen vielfältige Feldgeräte für die Prozessinstrumentierung eingesetzt. Diese sind häufig mit einer Bedieneinheit versehen, an welcher durch Bedienereingabe beispielsweise dessen Konfiguration für seinen Betrieb innerhalb des Automatisierungssystems vorgenommen oder das Feldgerät betreffende Prozesswerte vor Ort zur Anzeige gebracht werden können. Messumformer, häufig als Sensoren bezeichnet, dienen zur Erfassung von Prozessvariablen, wie beispielsweise Temperatur, Druck, Durchflussmenge, Füllstand, Dichte oder Gaskonzentration eines Mediums. Durch Stellglieder, auch Aktoren genannt, kann der Prozessablauf in Abhängigkeit von erfassten Prozessvariablen entsprechend einer beispielsweise von einer speicherprogrammierbaren Steuerung oder einer Leitstation vorgegebenen Strategie beeinflusst werden. Als Beispiele für Stellglieder seien ein Regelventil, eine Heizung oder eine Pumpe genannt.

Sensoren der Prozessinstrumentierung werden bisher als reine Messmittel eingesetzt, die ihre Daten, das heißt aktuelle Werte der durch sie erfassten Prozessvariablen, in einem Automatisierungssystem an eine übergeordnete Steuerung übertragen. Bei der übergeordneten Steuerung kann es sich beispielsweise um eine speicherprogrammierbare Steuerung, auch Controller oder Automatisierungsgerät genannt, oder um eine Cloud-Anwendung handeln. In der Steuerung erfolgt die Verarbeitung der Messwerte beispielsweise zur Realisierung einer Regelung, zum Beispiel eines PID-Reglers, oder zur Berechnung von weiteren Prozesswerten, die aus den erfassten Prozesswerten ableitbar sind und auch als Soft-Prozesswerte bezeichnet werden. Über ein Netzwerk zur Datenkommunikation können die Feldgeräte direkt mit der übergeordneten Steuerung oder indirekt über ein so genanntes Remote-IO-System mit dieser verbunden sein, wobei dann das Remote-IO-System für die Feldgeräte jeweils einen Steuerungsanschluss zur Verfügung stellt. Ein derartiges Remote-IO-System wird in der vorliegenden Anmeldung als Bestandteil der Steuerung angesehen.

Als Netzwerk zur Datenkommunikation, durch welches die Feldgeräte mit der übergeordneten Steuerung verbunden sind, kommen häufig Feldbusse zum Einsatz, die beispielsweise nach den Protokollen PROFIBUS, HART (Highway Addressable Remote Transducer) oder FF (Foundation Fieldbus) arbeiten. Die Konfiguration, Inbetriebnahme und die Überwachung der Automatisierungsanwendung, die mit dem Automatisierungssystem realisiert wird, wird mittels eines Leitsystems vorgenommen. Als Beispiele seien SCADA (Supervisory Control and Data Acquisition)-System, WinCC (Windows Control Center) und PLS (Prozessleitsystem), zum Beispiel SIMATIC PCS7, genannt.

In nachteiliger Weise ist es bisher nicht möglich, an einem Feldgerät des Automatisierungssystems Messwerte, die durch andere Feldgeräte erfasst wurden, oder an anderer Stelle des Automatisierungssystems berechnete Soft-Prozesswerte aufzurufen und einem Bediener anzuzeigen, oder Maßnahmen zur Konfiguration des Automatisierungssystems oder deren Änderung vorzunehmen.

In der DE 699 33 895 T2 ist ein Verfahren zum Betreiben eines Automatisierungssystems offenbart.

Die EP 2 711 795 A1 zeigt ein Verfahren zur Fernbedienung eines Feldgeräts.

Der Erfindung liegt daher die Aufgabe zugrunde, die Bedienbarkeit von Automatisierungssystemen zu verbessern.

Zur Lösung dieser Aufgabe weist das neue Verfahren zum Betreiben eines Automatisierungssystems die in Anspruch 1 angegebenen Merkmale auf. Weiterbildungen des Verfahrens sind in den abhängigen Ansprüchen beschrieben. In Anspruch 8 ist ein Automatisierungssystem, in Anspruch 6 ein Feldgerät und in Anspruch 7 eine Steuerung, welche zur Durchführung des Verfahrens geeignet sind, angegeben.

Bisher konnten an der Bedieneinheit eines Feldgeräts lediglich der durch das Feldgerät selbst erfasste Prozesswert zur Anzeige gebracht oder das Feldgerät oder dessen Kommunikation betreffende Einstellungen der Konfiguration und Parametrierung vorgenommen werden. Durch die neue Betriebsart des Automatisierungssystems wird es nun in vorteilhafter Weise ermöglicht, an einem ersten Feldgerät Informationen auf der Basis von Daten, die im Automatisierungssystem außerhalb des ersten Feldgeräts liegende Funktionalitäten betreffen, zur Anzeige zu bringen. Dabei kann es sich beispielsweise um Messwerte handeln, die bisher so nicht an diesem verfügbar waren und im Automatisierungssystem von außerhalb des ersten Feldgeräts liegenden Quellen stammen. Beispiele hierfür sind ein Messwert, der von einem zweiten, anderen Feldgerät erfasst wurde, oder ein so genannter Soft-Prozesswert. Wenn für einen Bediener des Automatisierungssystems, der sich gerade an der Bedieneinheit des ersten Feldgeräts befindet, auch weitere Prozesswerte, die im Automatisierungssystem durch eventuell entfernt angeordnete Feldgeräte erfasst werden, von Interesse sind, ist es somit in vorteilhafter Weise nicht mehr erforderlich, dass er seinen momentanen Arbeitsplatz verlässt, um sich die benötigten Informationen von einem anderen Ort, beispielsweise dem Standort des Leitsystems oder dem Einbauort des zweiten Feldgeräts, zu holen.

Gemäß einer besonders vorteilhaften Weiterbildung enthält die durch das erste Feldgerät gesendete Anforderung eine zumindest innerhalb des Automatisierungssystems eindeutige Kennung der bereitzustellenden Daten. Die Verwendung einer derartigen, systemweit eindeutigen ID (z.B. URI -Universal Ressource Identifier) hat den Vorteil, dass die Anforderung beispielsweise eines gewünschten Messwertes oder eines Konfigurationsparameters erleichtert wird.

Ergänzend oder alternativ dazu wird es durch die Erfindung in vorteilhafter Weise ermöglicht, durch Vor-Ort-Eingabe an einem ersten Feldgerät Automatisierungsfunktionen des Automatisierungssystems zu konfigurieren, die nicht auf dem ersten Feldgerät selbst ablaufen. Zudem sind auf dem Feldgerät realisierte Automatisierungsfunktionen, zum Beispiel eine Steuerung im Feld (englisch: Control in the Field), bei welcher ein Regelungsprozess anstatt in einer übergeordneten Steuerung in einem Feldgerät abläuft, durch direkt am Feldgerät vorzunehmende Eingaben konfigurierbar. Beispielsweise im Falle eines Sensors als erstes Feldgerät kann Control in the Field derart konfiguriert werden, dass dieses anhand seines erfassten Prozesswerts eine Stellgröße für einen Aktor als zweites Feldgerät berechnet und zu diesem überträgt. Zur Konfiguration dieser Funktion wird ein Zugriff auf Parameter des zweiten Feldgeräts benötigt, also auf Daten, die im Automatisierungssystem außerhalb des ersten Feldgeräts liegende Funktionalitäten betreffen.

Die neue Betriebsart des Automatisierungssystems ermöglicht somit eine flexible Bedienung und Überwachung von Automatisierungsanwendungen an einem Feldgerät vor Ort. Zusätzliche Messwerte von anderen Quellen des Automatisierungsgeräts oder Soft-Prozesswerte können in der Feldinstrumentierungsebene aufgerufen und zur Anzeige gebracht werden. Das Anlagenpersonal kann Ad-Hoc entscheiden, wie es auf die zur Automatisierungsanwendung gehörenden Informationen zugreifen möchte. Der Zugriff kann wie bisher über das Leitsystem bzw. über ein SCADA-System erfolgen oder jederzeit auch vor Ort an den Feldgeräten, zum Beispiel einem Sensor oder einem Aktor.

Die Kommunikation zwischen den Feldgeräten und der übergeordneten Steuerung kann auf dem Netzwerk beispielsweise mit einer 4-20 mA-Schnittstelle des Feldgeräts mit HART-Protokoll oder einem Feldbus des Typs PROFIBUS PA oder Foundation Fieldbus (FF) erfolgen. Dies sind Kommunikationsprotokolle, die nach dem Master/Slave-Prinzip funktionieren und bei welchen per se nicht vorgesehen ist, dass ein Feldgerät über das Netzwerk seinem Steuerungsanschluss signalisiert, dass zur Realisierung einer bestimmten Funktionalität Daten bereitgestellt werden müssen, die in einem Automatisierungssystem außerhalb des Feldgeräts liegende Funktionalitäten betreffen. Zur Ermöglichung einer derartigen Signalisierung wird erfindungsgemäß ein neuer Alarm, eine spezielle Meldung oder ein spezieller Response-Code definiert, der in der zyklischen Master/Slave-Kommunikation vom Feldgerät zur Steuerung übertragen wird. Zumindest eine dieser Möglichkeiten wird durch jedes Kommunikationsprotokoll gemäß Master/Slave-Prinzip bereitgestellt.

Die oben genannte Nutzung von reservierten Bits in einem HART-Response-Code zur Signalisierung einer durch Bedienereingabe an einem Feldgerät vor Ort initiierten Anforderung von Daten ist mit dem Risiko verbunden, dass dieselben Bits zukünftig von anderen Anwendern für andere Zwecke genutzt werden. Gemäß einer vorteilhaften Alternative kann zur Vermeidung dieses Risikos beispielsweise in einem Netzwerk mit HART-Protokoll eine Gerätevariable dazu genutzt werden, durch entsprechende Codierung eine Datenanforderung zu signalisieren. Dabei kann beispielsweise folgende Codierung verwendet werden:
0x01 = Request for Soft-Sensor Results,
0x02 = Application Parameters Changed.

Mit dem HART Cmd 9 können bis zu acht Gerätevariablen auf einmal abgefragt werden. Ein HART-Master pollt zyklisch mit Cmd 9 die Werte der Gerätevariablen der Slaves, also in diesem Falle der angeschlossenen Feldgeräte, ab. Mit dieser Abfrage erhält die Steuerung über ein Netzwerk mit HART-Protokoll zyklisch beispielsweise von einem Sensor als Feldgerät aktuell erfasste Werte von Prozessvariablen, zum Beispiel Druckmesswerte, und zudem den beispielsweise in obiger Form codierten Wert, mit welchem bei entsprechender Bedienereingabe eine Datenanforderung signalisiert werden kann.

Gemäß einem weiteren vorteilhaften Ausführungsbeispiel werden durch die Steuerung nach Erkennen einer signalisierten Datenanforderung die vom Feldgerät gewünschten anwendungsspezifischen Daten im Falle eines Netzwerks mit HART-Protokoll durch ein HART-Command, zum Beispiel ein Device Specific Command, oder im Falle eines PROFIBUS-Masters durch azyklische PROFIBUS-Kommunikation dem anfordernden Feldgerät bereitgestellt. In vorteilhafter Weise können mit diesen Kommunikationsmechanismen Daten sowohl von der Steuerung zum Feldgerät als auch in umgekehrter Richtung übertragen werden. Als alternative Möglichkeit kann beispielsweise ein vorkonfigurierter Output-Slot genutzt werden, der für eine deterministische PROFIBUS-Kommunikation vorgesehen ist. Nach Erhalt der Datenanforderung vom Feldgerät nutzt dann die Steuerung den Output-Slot dazu, die angeforderten Daten deterministisch zum Feldgerät zu übertragen.

Wie durch die genannten Ausführungsbeispiele verdeutlicht, müssen keine neuen Kommunikationsstandards entwickelt werden, da existierende Mechanismen in spezieller Form genutzt werden können. Mit der neuen Betriebsart wird die Realisierung eines Multisensor-Systems mit Vor-Ort-Bedienbarkeit oder eines Soft-Feldgerätesystems ermöglicht, wobei eine Implementierung von Steuerungsanschlüssen mit Remote-IOs oder Feldverteilern eine in einfacher Weise skalierbare Lösung darstellt. Falls eine speicherprogrammierbare Steuerung oder ein Remote-IO zum Anschluss der Feldgeräte genutzt wird, steht zur Versorgung der Feldgeräte mit Hilfsenergie ausreichend Energie auf der Anschlussleitung zur Verfügung und eine Begrenzung der Zahl angeschlossener Feldgeräte auf zwei bis drei, die bei üblichen Zweileitersystemen gegeben ist, entfällt. Einen weiteren Vorteil stellt die Möglichkeit dar, Werte von Prozessvariablen, die mit räumlich weit auseinander liegenden Feldgeräten erfasst werden, insbesondere auch Werte, die von Feldgeräten geliefert werden, die an räumlich getrennten Anschlusspunkten an die Steuerung angeschlossen sind, an einer beliebigen Stelle des Automatisierungssystems, beispielsweise in einer Remote-IO oder einer Netzwerkkomponente, zu einem neuen Wert zu verarbeiten. Die neue Betriebsart kann in vorteilhafter Weise als Basis genutzt werden, um Teilsysteme oder Module autonom, das heißt ohne eine zentrale Steuerung oder ein Leitsystem, zu betreiben. Sie erlaubt die Durchführung einer Konfiguration oder einer Diagnose des Automatisierungssystems oder von Teilen des Automatisierungssystems, ohne ein im Automatisierungssystem vorhandenes Engineering- oder Diagnose-Werkzeug zu verwenden.

Anhand der Zeichnungen, in denen ein Ausführungsbeispiel der Erfindung dargestellt ist, werden im Folgenden Ausgestaltungen und Vorteile der Erfindung näher erläutert.

Es zeigen:
- Figur 1: ein Blockschaltbild eines Automatisierungssystems und
- Figur 2: verschiedene Kommunikationssequenzen.

Gleiche Teile sind in den beiden Figuren mit gleichen Bezugszeichen versehen.

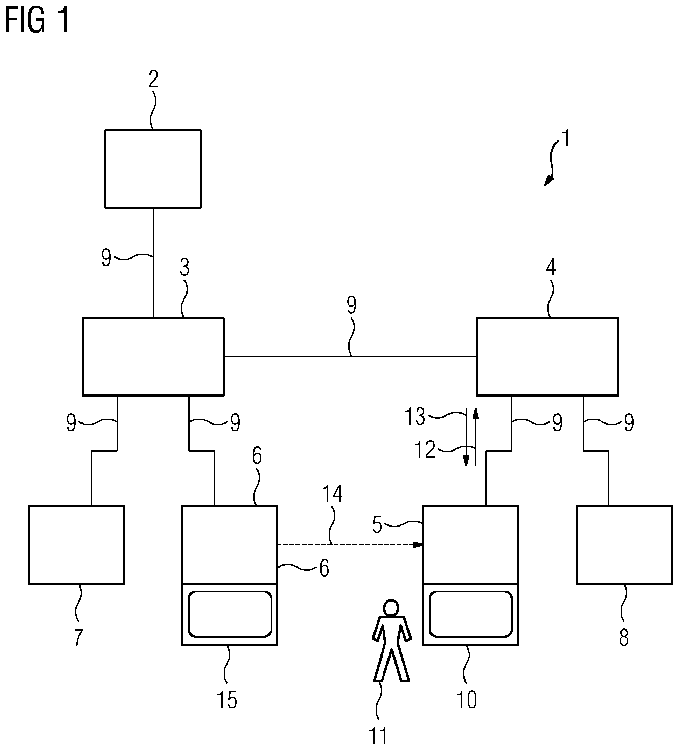

In Figur 1 ist ein Automatisierungssystem 1 dargestellt, welches in einer nicht weiter dargestellten automatisierungstechnischen Anlage zur Steuerung eines Prozesses dient. In dem Automatisierungssystem 1 sind eine Station 2, eine speicherprogrammierbare Steuerung 3, eine Remote IO 4, ein erstes Feldgerät 5, ein zweites Feldgerät 6, ein drittes Feldgerät 7 und ein viertes Feldgerät 8 durch ein Netzwerk 9 zur Datenkommunikation miteinander verbunden. Bei dem Netzwerk 9 kann es sich um ein beliebiges industrielles Netzwerk handeln, zum Beispiel mit PROFIBUS-, PROFINET-, HART- oder FF-Protokoll. Für die einzelnen Verbindungen, die im Netzwerk 9 zwischen den genannten Komponenten bestehen, können selbstverständlich im selben Netzwerk 9 verschiedene Kommunikationsstandards verwendet werden, die sich in der jeweiligen physikalischen Übertragungstechnik und/oder dem jeweiligen Kommunikationsprotokoll voneinander unterscheiden.

Die speicherprogrammierbare Steuerung 3 und die Remote-IO 4 bilden gemeinsam eine den Feldgeräten 5...8 übergeordnete Steuerung. Das erste Feldgerät 5 ist mit einer Bedieneinheit 10, das zweite Feldgerät 6 mit einer Bedieneinheit 15 versehen, an welchen ein Bediener 11 Eingaben vornehmen kann und auf welchen an diesen Informationen über das Automatisierungssystem 1 ausgegeben werden können. Selbstverständlich können die weiteren Feldgeräte 7 und 8 ebenso mit in der Figur nicht dargestellten Bedieneinheiten versehen sein.

In bekannten Automatisierungssystemen war dessen Engineering, Konfiguration und Bedienung lediglich mittels der Station 2 und nicht mittels beispielsweise einer Bedieneinheit 10, die, wie es im Ausführungsbeispiel gemäß Figur 1 gezeigt ist, dem Feldgerät 5 zugeordnet ist, möglich. Um nun auch eine Konfiguration und Bedienung des Automatisierungssystems 1 mittels der Bedieneinheit 10 zu ermöglichen, wird eine neue Betriebsart des Automatisierungssystems eingeführt. Will der Bediener 11 durch Bedienung des ersten Feldgeräts 5 auf Daten zugreifen, die im Automatisierungssystem 1 außerhalb des ersten Feldgeräts 5 liegende Funktionalitäten betreffen, wird eine entsprechende Anforderung, in Figur 1 angedeutet mit einem Pfeil 12, an die Remote IO 4 gesendet, wobei die Anforderung mit einer innerhalb des Automatisierungssystems (1) eindeutigen Kennung der gewünschten Daten versehen sein kann. Dies wird durch die Remote IO 4 mit der Bereitstellung der angeforderten Daten, symbolisiert mit Pfeil 13, beantwortet. Auf diese Weise können beispielsweise durch das zweite Feldgerät 6 erfasste Prozesswerte, welche der Steuerung bekannt sind, auf der Bedieneinheit 10 zur Anzeige gebracht werden. Dies ist in Figur 1 mit einem durchbrochenen Pfeil 14 angedeutet.

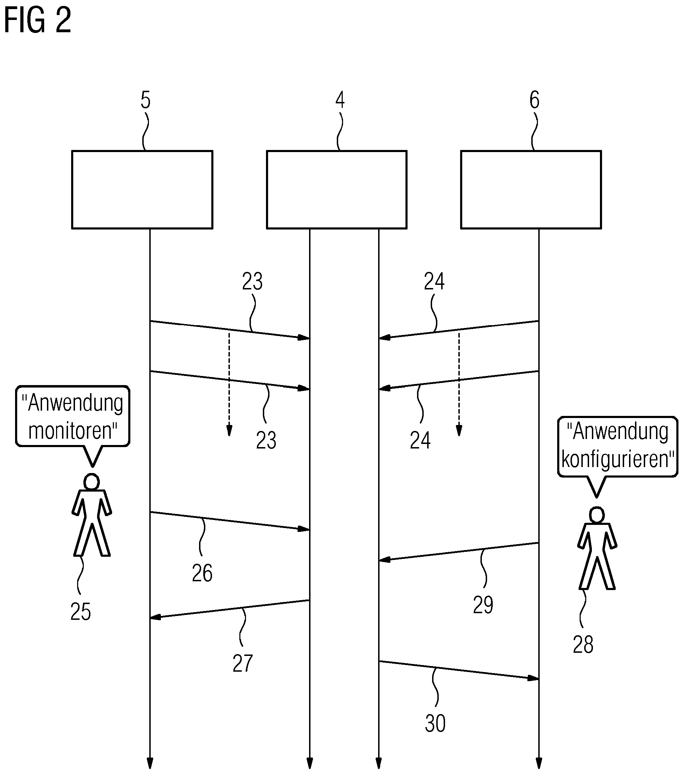

Die oben beschriebene neue Betriebsart zum Monitoring der auf dem Automatisierungssystem 1 ablaufenden Anwendung, hier konkret zur Anzeige eines außerhalb des ersten Feldgeräts 5 erfassten Prozesswerts, beruht auf einer Kommunikationssequenz, die im Folgenden gemeinsam mit einer weiteren Kommunikationssequenz, die zur Konfiguration der Anwendung geeignet ist, anhand Figur 2 näher erläutert wird.

In Figur 2 ist auf der linken Seite die bereits oben angedeutete Kommunikationssequenz zwischen dem ersten Sensor 5 und der Remote IO 4 als Teil der Steuerung, auf der rechten Seite eine Kommunikationssequenz zwischen dem zweiten Sensor 6 und der Steuerung (Remote IO 4) dargestellt. Während des normalen Betriebs der Anlage, die durch das Automatisierungssystem gesteuert wird, werden die jeweils durch den ersten Sensor 5 und den zweiten Sensor 6 erfassten Prozesswerte zyklisch zur Steuerung übertragen, wie es in Figur 2 mit Pfeilen 23 bzw. 24 symbolisiert ist. Im Beispiel einer 4-20 mA-Schnittstelle mit HART-Protokoll kann dies beispielsweise mit dem HART Cmd 1 unter Nutzung eines HART Response Codes erfolgen. In der Anwendung, welche in der Steuerung abläuft, werden die erhaltenen Prozesswerte beispielsweise zur Berechnung weiterer Soft-Prozesswerte oder zur Berechnung von Stellgrößen, mit welchen in den Betrieb der Anlage eingegriffen wird, verwendet. Soll nun an dem ersten Sensor 5 ein Monitoring der Anwendung durch einen Bediener 25 erfolgen, so wird nach entsprechender Bedienereingabe ("Anwendung monitoren") an der Bedieneinheit 10 (Figur 1) des ersten Sensors 5 der Wunsch einer Vor-Ort-Anzeige beispielsweise im Response Code zum HART Cmd 1 der Steuerung signalisiert, wie dies in Figur 2 durch einen Pfeil 26 symbolisch dargestellt ist. Die der empfangenen Anforderung entsprechenden Daten, im beschriebenen Beispiel der aktuell durch den zweiten Sensor 6 erfasste Wert einer Prozessvariablen oder ein aus mehreren empfangenen Prozesswerten in der Steuerung berechneter Soft-Prozesswert, sendet die Steuerung daraufhin entsprechend einem Pfeil 27 an den ersten Sensor 5, auf dessen Bedieneinheit die zuvor vom Bediener 25 gewünschten Informationen zur Anzeige gebracht werden.

Will ein Bediener 28 am zweiten Sensor 6 beispielsweise Maßnahmen zur Änderung der Konfiguration des Automatisierungssystems vornehmen, nimmt er an der Bedieneinheit 15 (Figur 1) des zweiten Feldgeräts 6 eine entsprechende Eingabe ("Anwendung konfigurieren") vor und im Response Code zum HART Cmd 1 wird der Steuerung - wie durch einen Pfeil 29 in Figur 2 angedeutet - der Wunsch einer Vor-Ort-Bedienung signalisiert. Durch anschließendes Polling unter Verwendung des Device Specific HART Command können die gewünschten Konfigurationsparameter von der Steuerung zum zweiten Sensor 6 übertragen werden. Dies wird durch einen Pfeil 30 in Figur 2 symbolisiert.

Alternativ zur oben beschriebenen Verwendung des HART Cmd 1 ist die zyklische Übertragung der Prozesswerte selbstverständlich auch unter Nutzung des HART Cmd 9 möglich. Die Signalisierung einer Vor-Ort-Anzeige durch den ersten Sensor 5 bzw. die Signalisierung einer gewünschten Vor-Ort-Bedienung durch den zweiten Sensor 6 kann ebenso mit Nutzung einer HART Device Variable erfolgen, die zusätzlich zum jeweiligen Prozesswert durch die Steuerung per HART Cmd 9 abgefragt wird.

Mit Hilfe der in Figur 2 dargestellten Kommunikationssequenzen können in vorteilhafter Weise auf dem ersten Sensor 5 Messwerte zur Anzeige gebracht werden, die so erst einmal nicht an dem ersten Sensor 5 verfügbar waren. Des Weiteren können durch Vornahme von Bedieneingaben am zweiten Sensor 6 Automatisierungsfunktionen konfiguriert werden, die nicht auf dem zweiten Sensor 6 ablaufen. Um diese Bedienmöglichkeiten zu schaffen, werden mit Hilfe der dargestellten Kommunikationssequenzen dem ersten Sensor 5 bzw. dem zweiten Sensor 6 Daten bereitgestellt, die im Automatisierungssystem außerhalb der Sensoren 5 bzw. 6 liegende Funktionalitäten betreffen. Selbstverständlich kann die anhand des zweiten Sensors 6 beschriebene Kommunikationssequenz ebenso mit dem ersten Sensor 5 durchgeführt werden und umgekehrt.

## Patentansprüche

1. Verfahren zum Betreiben eines Automatisierungssystems (1), wobei das Automatisierungssystem (1) zumindest eine Steuerung (3, 4) und mehrere Feldgeräte (5 ... 8) aufweist, die durch ein Netzwerk (9) zur Datenkommunikation miteinander verbunden sind, und wobei zumindest ein erstes Feldgerät (5) mit einer Bedieneinheit (10) versehen ist, das Verfahren umfassend:
a) Senden einer Anforderung einer Bereitstellung von Daten durch das erste Feldgerät (5) an die Steuerung (3, 4) in Abhängigkeit einer vorbestimmten oder vorbestimmbaren Bedienereingabe,
wobei die Übersendung der Anforderung über das Netzwerk (9) mit einem vorbestimmten Alarm, einer vorbestimmten Meldung, einem vorbestimmten Antwortcode oder mit einem vorbestimmten Code für eine Gerätevariable erfolgt,
wobei die Daten im Automatisierungssystem (1) außerhalb des ersten Feldgeräts liegende Funktionalitäten betreffen,
b) Senden von der empfangenen Anforderung entsprechenden Daten an das erste Feldgerät (5) durch die Steuerung (3, 4),
c) Ausgeben einer den empfangenen Daten entsprechenden Information auf der Bedieneinheit (10) durch das erste Feldgerät (5).

2. Verfahren nach Anspruch 1, **dadurch gekennzeichnet, dass** die durch das erste Feldgerät (5) gesendete Anforderung eine zumindest innerhalb des Automatisierungssystems (1) eindeutige Kennung der bereitzustellenden Daten enthält.

3. Verfahren nach Anspruch 1 oder 2, **dadurch gekennzeichnet, dass** die Information ein Prozesswert ist, der von einem zweiten, anderen Feldgerät (6) erfasst wurde, oder ein anderer, aus erfassten Prozesswerten berechneter Soft-Prozesswert.

4. Verfahren nach einem der vorhergehenden Ansprüche, **dadurch gekennzeichnet, dass** die Information die Konfiguration des Automatisierungssystems (1) betrifft.

5. Verfahren nach Anspruch 1, **dadurch gekennzeichnet, dass** die Übersendung der der empfangenen Anforderung entsprechenden Daten per HART Cmd, per azyklischer PROFIBUS-Kommunikation oder mittels eines vorkonfigurierten Output-Slots per deterministischer PROFIBUS-Kommunikation erfolgt.

6. Feldgerät für ein Automatisierungssystem, (1) wobei das Automatisierungssystem (1) zumindest eine Steuerung (3, 4) und ein Netzwerk (9) zur Datenkommunikation umfasst, wobei das Feldgerät (5) mit einer Bedieneinheit (10) versehen ist, wobei das Feldgerät (5) dazu ausgebildet ist, in Abhängigkeit einer vorbestimmten oder vorbestimmbaren Bedienereingabe an die Steuerung (3, 4) eine Anforderung einer Bereitstellung von Daten, die im Automatisierungssystem (1) außerhalb des Feldgeräts liegende Funktionalitäten betreffen, zu senden, wobei die Übersendung der Anforderung über das Netzwerk (9) mit einem vorbestimmten Alarm, einer vorbestimmten Meldung, einem vorbestimmten Antwortcode oder mit einem vorbestimmten Code für eine Gerätevariable erfolgt, und von der Steuerung (3, 4) der Anforderung entsprechende Daten zu empfangen und eine den empfangenen Daten entsprechende Information auf der Bedieneinheit (10) auszugeben.

7. Steuerung für ein Automatisierungssystem, (1) wobei das Automatisierungssystem (1) ein Netzwerk (9) zur Datenkommunikation umfasst, wobei die Steuerung dazu ausgebildet ist, von einem ersten Feldgerät (5) mit einer Bedieneinheit (10) in Abhängigkeit einer vorbestimmten oder vorbestimmbaren Bedienereingabe eine Anforderung einer Bereitstellung von Daten, die im Automatisierungssystem (1) außerhalb des ersten Feldgeräts liegende Funktionalitäten betreffen, zu empfangen und der empfangenen Anforderung entsprechende Daten an das erste Feldgerät (5) zu senden, wobei die Übersendung der Anforderung über das Netzwerk (9) mit einem vorbestimmten Alarm, einer vorbestimmten Meldung, einem vorbestimmten Antwortcode oder mit einem vorbestimmten Code für eine Gerätevariable erfolgt.

8. Automatisierungssystem mit zumindest einer Steuerung (3, 4) gemäß Anspruch 7 und mit mehreren Feldgeräten (5 ... 8) gemäß Anspruch 6, die durch ein Netzwerk (9) zur Datenkommunikation miteinander verbunden sind, wobei zumindest ein erstes der mehreren Feldgeräte (5) mit einer Bedieneinheit (10) versehen ist, wobei das erste Feldgerät (5) dazu ausgebildet ist, in Abhängigkeit einer vorbestimmten oder vorbestimmbaren Bedienereingabe an die Steuerung (3, 4) eine Anforderung einer Bereitstellung von Daten, die im Automatisierungssystem (1) außerhalb des ersten Feldgeräts liegende Funktionalitäten betreffen, zu senden, wobei die Übersendung der Anforderung über das Netzwerk (9) mit einem vorbestimmten Alarm, einer vorbestimmten Meldung, einem vorbestimmten Antwortcode oder mit einem vorbestimmten Code für eine Gerätevariable erfolgt, und wobei die Steuerung (3, 4) dazu ausgebildet ist, der empfangenen Anforderung entsprechende Daten an das erste Feldgerät (5) zu senden und wobei das erste Feldgerät (5) weiterhin dazu ausgebildet ist, eine den empfangenen Daten entsprechende Information auf der Bedieneinheit (10) auszugeben.

## Claims

1. Method for operating an automation system (1), wherein the automation system (1) has at least one controller (3, 4) and a plurality of field devices (5...8) that are connected to one another by means of a network (9) for data communication, and wherein at least one first field device (5) is provided with an operating unit (10), the method comprising:
a) the first field device (5) transmitting a request to the controller (3, 4) for a provision of data depending upon a predetermined or predeterminable operator input,
wherein the transmission of the request via the network (9) takes place with a pre-determined alarm, a pre-determined message or a pre-determined response code or with a predetermined code for a device variable,
wherein the data in the automation system (1) relates to functionalities lying outside the first field device,
b) the controller (3, 4) transmitting data corresponding to the received request to the first field device (5),
c) the first field device (5) outputting an item of information corresponding to the received data on the operating unit (10).

2. Method according to claim 1, **characterised in that** the request transmitted by the first field device (5) contains an identification of the data to be provided that is unique, at least within the automation system (1).

3. Method according to claim 1 or 2, **characterised in that** the item of information is a process value which has been detected by a second, other field device (6) or another soft process value calculated from detected process values.

4. Method according to one of the preceding claims, **characterised in that** the item of information relates to the configuration of the automation system (1).

5. Method according to claim 1, **characterised in that** the transmission of the data corresponding to the received request takes place by means of HART Cmd, by means of acyclic PROFIBUS communication or by means of a pre-configured output slot via deterministic PROFIBUS communication.

6. Field device for an automation system (1), wherein the automation system (1) comprises at least a controller (3, 4) and a network (9) for data communication, wherein the field device (5) is provided with an operating unit (10), wherein the field device (5) is configured, depending upon a pre-determined or pre-determinable operator input, to transmit a request to the controller (3, 4) for a provision of data relating to functionalities in the automation system (1) lying outside the field device, wherein the transmission of the request via the network (9) takes place with a predetermined alarm, a predetermined message, a predetermined response code or with a predetermined code for a device variable, and to receive data corresponding to the request from the controller (3, 4) and to output an item of information corresponding to the received data on the operating unit (10).

7. Controller for an automation system (1), wherein the automation system (1) comprises a network (9) for data communication, wherein the controller is configured to receive a request from a first field device (5) with an operating unit (10), depending upon a pre-determined or pre-determinable operator input, for a provision of data which relates to functionalities in the automation system (1) lying outside the first field device and to transmit to the first field device (5) data corresponding to the received request, wherein the transmission of the request takes place via the network (9) with a predetermined alarm, a predetermined message, a predetermined response code or with a predetermined code for a device variable.

8. Automation system with at least one controller (3, 4) according to claim 7 and with a number of field devices (5...8) according to claim 6, which are connected to one another for data communication by means of a network (9), wherein at least a first of the number of field devices (5) is provided with an operating unit (10), wherein the first field device (5) is configured to transmit a request for a provision of data, which relates to functionalities in the automation system (1) lying outside the first field device depending upon a predetermined or predeterminable operating input on the controller (3,4), wherein the transmission of the request takes place via the network (9) with a predetermined alarm, a predetermined message, a predetermined response code or with a predetermined code for a device variable, and wherein the controller (3, 4) is configured to transmit the data corresponding to the received request to the first field device (5) and wherein the first field device (5) is also configured to output an item of information corresponding to the received data on the operating unit (10).

## Revendications

1. Procédé pour faire fonctionner un système (1) d'automatisation, le système (1) d'automatisation ayant au moins une commande (3, 4) et plusieurs appareils (5 ... 8) sur site, qui sont reliés entre eux pour la communication de données par un réseau (9), et dans lequel au moins un premier appareil (5) sur site est pourvu d'une unité (10) de manœuvre, le procédé comprenant :
a) on envoie une requête de mise à disposition de données par le premier appareil (5) sur site à la commande (3, 4) en fonction d'une entrée de manœuvre déterminée ou pouvant l'être,
on transmet la requête par le réseau (9) s'effectuant avec une alerte déterminée à l'avance, un message déterminé à l'avance, un code de réponse déterminé à l'avance ou un code déterminé à l'avance pour une variable d'appareil,
les données dans le système (1) d'automatisation concernant des fonctionnalités se trouvant à l'extérieur du premier appareil sur site,
b) on envoie, par la commande (3, 4) au premier appareil (5) sur site, les données correspondant à la requête reçue,
c) on donne à l'unité (10) de manœuvre, par le premier appareil (5) sur site, une information correspondant aux données reçues.

2. Procédé suivant la revendication 1, **caractérisé en ce que** la requête envoyée par le premier appareil (5) sur site contient une caractérisation univoque, au moins au sein du système (1) d'automatisation, des données à mettre à disposition.

3. Procédé suivant la revendication 1 ou 2, **caractérisé en ce que** l'information est une valeur de processus, qui a été relevée par un autre deuxième appareil (6) sur site, ou une autre valeur de processus de logiciel calculée à partir de valeurs de processus relevées.

4. Procédé suivant l'une des revendications précédentes, **caractérisé en ce que** l'information concerne la configuration du système (1) d'automatisation.

5. Procédé suivant la revendication 1, **caractérisé en ce que** la transmission des données correspondant à la requête reçue a lieu par HART Cmd, par communication PROFIBUS acyclique ou au moyen d'une output-slots préconfigurée par communication PROFIBUS déterministe.

6. Appareil sur site d'un système (1) d'automatisation, le système (1) d'automatisation comprenant au moins une commande (3, 4) et un réseau (9) de communication de données, l'appareil (5) sur site étant pourvu d'une unité (10) de manœuvre, l'appareil (5) sur site étant constitué pour envoyer à la commande (3, 4), en fonction d'une entrée de manœuvre déterminée à l'avance ou pouvant l'être, une requête de mise à disposition de données, qui concerne, dans le système (1) d'automatisation, des fonctionnalités se trouvant à l'extérieur de l'appareil sur site, la transmission de la requête s'effectuant par le réseau (9) avec une alerte déterminée à l'avance, un message déterminé à l'avance, un code de réponse déterminé à l'avance ou un code déterminé à l'avance pour une variable d'appareil, et des données correspondant à la requête étant reçues par la commande (3, 4) et une information correspondant aux données reçues étant donnée à l'unité (10) de manœuvre.

7. Commande d'un système (1) d'automatisation, le système (1) d'automatisation comprenant un réseau (9) de communication de données, la commande étant constituée pour recevoir d'un premier appareil (5) sur site ayant une unité (10) de manœuvre, en fonction d'une entrée de manœuvre déterminée à l'avance ou pouvant l'être, une requête d'une mise à disposition de données, qui concerne, dans le système (1) d'automatisation, des fonctionnalités se trouvant à l'extérieur du premier appareil sur site, et pour envoyer au premier appareil (5) sur site des données correspondant à la requête reçue, la transmission de la requête par le réseau (9) s'effectuant avec une alerte déterminée à l'avance, un message déterminé à l'avance, un code de réponse déterminé à l'avance ou un code déterminé à l'avance pour une variable d'appareil.

8. Système d'automatisation, comprenant au moins une commande (3, 4) suivant la revendication 7 et plusieurs appareils (5 ... 8) sur site suivant la revendication 6, qui sont reliés entre eux par un réseau (9) de communication de données, au moins un premier des plusieurs appareils (5) sur site étant pourvu d'une unité (10) de manœuvre, le premier appareil (5) sur site étant constitué pour envoyer, en fonction d'une entrée déterminée à l'avance ou pouvant l'être, à la commande (3, 4) une requête d'une mise à disposition de données, qui concernent, dans le système (1) d'automatisation, des fonctionnalités se trouvant à l'extérieur du premier appareil sur site, la transmission de la requête par le réseau (9) s'effectuant avec une alerte déterminée à l'avance, un message déterminé à l'avance, un code de réponse déterminé à l'avance ou un code déterminé à l'avance pour une variable d'appareil, la commande (3, 4) étant constituée pour envoyer au premier appareil (5) sur site des données correspondant à la requête reçue et le premier appareil (5) sur site étant constitué, en outre, pour donner à l'unité (10) de manœuvre une information correspondant aux données reçues.
